# EUROPÄISCHE PATENTSCHRIFT

(11) **EP 3 305 524 B1**
(45) Veröffentlichungstag und Bekanntmachung des Hinweises auf die Patenterteilung: **23.06.2021**
(21) Anmeldenummer: 17194034.9
(22) Anmeldetag: 29.09.2017
(51) Int. Cl.: B33Y 80/00, B29C 64/106, B29C 64/165, B33Y 10/00

(54) **VERFAHREN ZUR ADDITIVEN FERTIGUNG EINES AUFNAHMEBEHÄLTERS**
METHOD FOR THE ADDITIVE MANUFACTURING OF A RECEPTACLE
PROCÉDÉ DE FABRICATION ADDITIVE D'UN RÉCEPTACLE

(30) Priorität: 07.10.2016 DE 102016219458
(43) Veröffentlichungstag der Anmeldung: 11.04.2018
(73) Patentinhaber: Airbus Defence and Space GmbH, 82024 Taufkirchen (DE)
(72) Erfinder: SCHLÜTER, Ralf, 85521 Riemerling (DE)
(74) Vertreter: Isarpatent

(56) Entgegenhaltungen:
- WO-A2-01/30292
- US-A1- 2015 101 899
- N. N.: "Jigs And Fixtures: More Profitable Production", , 31 October 2014 (2014-10-31), XP055683710, Retrieved from the Internet: URL:https://www.sys-uk.com/wp-content/uplo ads/2016/01/White-Paper-Jigs-and-Fixtures- More-Profitable-Production-Web-English-10- 2014.pdf [retrieved on 2020-04-07]

## Beschreibung

Die vorliegende Erfindung betrifft ein Verfahren zur additiven Fertigung eines Aufnahmebehälters für die Lagerung und/oder den Transport eines Produktes. Ferner betrifft die vorliegenden Erfindung einen Aufnahmebehälter, der mit einem solchen Verfahren gefertigt ist. Insbesondere befasst sich die vorliegende Erfindung mit der produktindividuellen Fertigung von Transportbehältern und/oder Lagerbehältern.

Herkömmlicherweise werden für den Transport und/oder die Lagerung von technischen Geräten und/oder Produkten mit hohem Warenwert, großer Komplexität und Empfindlichkeit, wie sie beispielsweise in der Luftfahrtindustrie vielfach verwendet werden, Aufnahmebehälter individuell für das jeweilige Produkt konfektioniert und optimiert. Derartige typ-optimierte Behälter sind häufig aufwendig aus unterschiedlichen Materialien mit kostspieligen Werkzeugen und/oder hohem manuellen Aufwand gefertigt. Vielfach wird hierbei ein Gehäuse aus einem Metall bzw. einer Metalllegierung und/oder einem Kunststoff innen mit Einlagen und/oder Einsätzen aus Schaumstoff, Gummi, Kunststoff, Filz und/oder Holz oder dergleichen versehen, welche das entsprechende technische Gerät passgenau und sicher aufnehmen, fixieren und schützen sollen. Solche Behälter können nicht nur extrem kostspielig sein, z.B. können die Kosten für einen Behälter mitunter mehr als 10 % des Wertes der zu transportierenden Ware betragen, sondern sind zudem häufig nur mit hohem (Zeit-)Aufwand herzustellen.

Bei generativen bzw. additiven Fertigungsverfahren, auch allgemein als "3D-Druckverfahren" bezeichnet, werden ausgehend von einem digitalisierten geometrischen Modell eines Objekts ein oder mehrere Ausgangsmaterialien sequentiell in Lagen übereinandergeschichtet und ausgehärtet. So wird beispielsweise beim Selektiven Laserschmelzen (SLM) ein Bauteil schichtweise aus einem Modelliermaterial, beispielsweise ein Kunststoff oder ein Metall, aufgebaut, indem das Modelliermaterial in Pulverform auf eine Unterlage aufgebracht wird und gezielt durch lokale Laserbestrahlung verflüssigt wird, wodurch sich nach Abkühlung ein festes, zusammenhängendes Bauteil ergibt. 3D-Drucken bietet außergewöhnliche Designfreiheit und erlaubt es unter anderem Objekte mit überschaubaren Aufwand herzustellen, welche mit herkömmlichen Methoden nicht oder nur unter erheblichem Aufwand herstellbar wären. Aus diesem Grund sind 3D-Druckverfahren derzeit weit verbreitet im Industriedesign, in der Automobilindustrie, der Luft- und Raumfahrtindustrie oder generell in der industriellen Produktentwicklung, in der eine ressourceneffiziente Prozesskette zur bedarfsgerechten Klein- und Großserienfertigung individualisierter Bauteile eingesetzt wird.

Die Druckschrift WO 01/30292 A2 beschreibt ein Verfahren zum Entwurf einer anpassbaren Fixiervorrichtung zur Patientenpositionierung, mit der Patienten in ihrer Position und/oder Orientierung relativ zu einer medizinischen Vorrichtung für die Dauer einer Untersuchung bzw. Behandlung fixiert werden können.

Die Druckschrift US 2015/0101899 A1 beschreibt protektive Sportgeräte, wie z.B. Helme oder Brustpanzer, welche additiv gefertigt sind und mit zusammendrückbaren Kammern zur Absorption von Aufprallkräften ausgebildet sind.

Die Druckschrift N. N., "Jigs And Fixtures: More Profitable Production", 2014, beschreibt additiv gefertigte Vorrichtungen und Befestigungen.

Vor diesem Hintergrund liegt der vorliegenden Erfindung die Aufgabe zugrunde, einfache Lösungen für Behälter zur Aufnahme von technischen Hochpreisgütern zu finden.

Erfindungsgemäß wird diese Aufgabe gelöst durch ein Verfahren mit den Merkmalen des Patentanspruchs 1 und ein computerlesbares Medium mit den Merkmalen des Patentanspruchs 11.

Demgemäß ist ein Verfahren zur additiven Fertigung eines Aufnahmebehälters für die Lagerung und/oder den Transport eines Produktes vorgesehen. Das Verfahren umfasst dreidimensionales Erfassen der äußeren Gestalt des Produktes, Erstellen eines computerlesbaren Datensatzes, welcher Informationen über die erfasste äußere Gestalt des Produkts umfasst, und additives Fertigen des Aufnahmebehälters. Hierbei wird ein Modelliermaterial basierend auf dem erstellten Datensatz computergesteuert schichtweise abgelegt, verflüssigt und ausgehärtet. Der Aufnahmebehälter wird mit einer Innenstruktur geformt, welche einen an die äußere Gestalt des Produkts angepassten Aufnahmeraum umgibt. Der Datensatz umfasst Informationen über charakteristische Schutzanforderungen des Produktes umfasst und die Innenstruktur wird derart geformt, dass spezifische Kenngrößen der Innenstruktur auf die Schutzanforderungen optimiert werden.

Ferner ist ein computerlesbares Medium vorgesehen, auf welchem computerausführbare Anweisungen gespeichert sind, die bei Ausführung mittels einer datenverarbeitenden Vorrichtung die datenverarbeitende Vorrichtung dazu veranlassen, ein erfindungsgemäßes Verfahren auszuführen.

Die der vorliegenden Erfindung zugrunde liegende Idee besteht darin, Aufnahmebehälter für den Transport oder die Lagerung produktindividuell mit einer 3D-Druckvorrichtung zu fertigen. Hierzu muss lediglich die äußere Gestalt des Produktes einmal dreidimensional erfasst werden. Dies kann beispielsweise mit Hilfe eines 3D-Scanners oder dergleichen durchgeführt werden. Prinzipiell sind über die äußere Gestalt des Produkts hinaus noch weitere Eigenschaften erfassbar, z.B. das Gewicht, die Gewichtsverteilung etc. Diese erfindungsgemäße Idee hat den erheblichen Vorteil, dass der Aufnahmebehälter optimal an die jeweiligen Anforderungen des aufzunehmenden Produkts, beispielsweise ein technisches Gerät, anpassbar ist. Ferner können computergestützte Algorithmen verwendet werden, um den entsprechenden Aufnahmebehälter möglichsten vorteilhaft zu konstruieren, z.B. in geometrischer oder materieller Hinsicht. In einem Beispiel können Finite-Elemente-Methoden (FEM) angewendet werden, mit Hilfe derer beispielsweise die Kraftwirkungen, Lastpfade usw. innerhalb des Aufnahmebehälters simuliert werden, um eine optimale geometrische und strukturelle Ausgestaltung des Aufnahmebehälters für ein bestimmtes vorgegebenes Produkt zu berechnen. Sobald der Aufnahmebehälter einmal für ein bestimmtes Produkt berechnet worden ist, kann diese Konfiguration auf einem computerlesbaren Medium gespeichert werden. Prinzipiell lassen sich so sehr einfach beliebig viele solcher Behälter drucken. Beispielsweise kann an einem entsprechenden Lager- oder Umschlagplatz eine 3D-Druckvorrichtung vorgesehen werden, mit welcher jederzeit ein passender Aufnahmebehälter für hochanspruchsvolle technische Geräte herstellbar ist. Mit dem erfindungsgemäßen Verfahren kann ein optimaler Aufnahmebehälter vollständig in integraler Weise in einem einzigen Druckprozess gefertigt werden, ohne dass besonderer Aufwand oder gar händische Arbeit notwendig wäre. Grundsätzlich kann der erfindungsgemäße Aufnahmebehälter aus sämtlichen Materialien oder Materialkombinationen gefertigt werden, für welche additive Verfahren bekannt sind.

Beispielsweise kann der Aufnahmebehälter aus einem oder mehreren Kunststoffen, z.B. Acrylnitril-Butadien-Styrol (ABS), gebildet werden.

3D-Druckverfahren sind insbesondere vorteilhaft, da sie die Herstellung von dreidimensionalen Komponenten in urformenden Verfahren ermöglichen, ohne spezielle, auf die äußere Form der Komponenten abgestimmte Fertigungswerkzeuge zu benötigen. Dadurch werden hocheffiziente, Material sparende und Zeit sparende Herstellungsprozesse für Bauteile und Komponenten ermöglicht. Besonders vorteilhaft sind derartige 3D-Druckverfahren im Luft- und Raumfahrtbereich, da dort sehr viele verschiedene, auf spezielle Einsatzzwecke abgestimmte Bauteile eingesetzt werden, die in solchen 3D-Druckverfahren mit geringen Kosten, geringer Fertigungsvorlaufzeit und mit geringer Komplexität in den für die Herstellung benötigten Fertigungsanlagen herstellbar sind.

3D-Druckverfahren im Sinne der vorliegenden Anmeldung umfassen alle generativen bzw. additiven Fertigungsverfahren, bei welchen auf der Basis von geometrischen Modellen Objekte vordefinierter Form aus formlosen Materialien wie Flüssigkeiten und Pulvern oder formneutralen Halbzeugen wie etwa band- oder drahtförmigem Material mittels chemischer und/oder physikalischer Prozesse in einem speziellen generativen Fertigungssystem hergestellt werden. 3D-Druckverfahren im Sinne der vorliegenden Anmeldung verwenden dabei additive Prozesse, bei denen das Ausgangsmaterial schichtweise in vorgegebenen Formen sequentiell aufgebaut wird.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann der Datensatz Informationen über nutzbare Lagerpunkte des Produktes umfassen. Die Innenstruktur kann mit Lagerelementen geformt werden, welche jeweils zur Aufnahme des Produktes an einem der Lagerpunkte ausgebildet sind. Beispielsweise können Aufnahmebolzen in einen Fuss- und/oder Deckenbereich der Innenstruktur eingedruckt werden, in welche das Produkt über entsprechende Ausnahmen oder Öffnungen einsetzbar ist. Je nach Produkt kann es jedoch ebenso möglich oder vorteilhaft sein, die Innenstruktur derart passgenau an das Produkt anzupassen, dass keine weitere Lagerung oder Befestigung des Produkts innerhalb des Aufnahmebehälters notwendig ist.

Gemäß einer Weiterbildung können die Lagerelemente federelastisch in die Innenstruktur geformt werden. Die Lagerelemente können hierbei insbesondere fließend in die Innenstruktur übergehen.

Gemäß einer Weiterbildung kann die Innenstruktur auf das Gewicht und/oder die Gewichtsverteilung des Produktes optimiert werden.

Hierzu kann beispielsweise die Innenstruktur mit einer Vielzahl von untereinander verbundenen Stützstreben geformt werden. Mittels computergestützten Algorithmen kann beispielsweise eine Innenstruktur berechnet werden, welche einen idealen Kompromiss zwischen Gewicht und Stabilität bietet. Insbesondere können hierzu bekannte Konstruktionsverfahren aus dem bionischen Design angewendet werden, welche beispielsweise inspiriert durch das natürliche Knochenwachstum eine überwiegend hohle und dennoch feste und widerstandsfähige Innenstruktur nahelegen, um Gewicht zu sparen, welche von einer Vielzahl von Stützstreben durchzogen ist. In einem konkreten Beispiel kann vorgesehen sein, dass eine derartige "Vogelknochenstruktur" einer Dichteverteilung folgt, die am äußeren Rand der Innenstruktur besonders viele oder starke Stützstrukturen vorsieht, welche ins Innere der Innenstruktur hinein immer leichter wird.

Gemäß der Erfindung umfasst der Datensatz Informationen über charakteristische Schutzanforderungen des Produktes. Die Innenstruktur ist dabei derart geformt, dass spezifische Kenngrößen der Innenstruktur auf die Schutzanforderungen optimiert werden.

Hierzu können die spezifischen Kenngrößen beispielsweise aus der Gruppe der Wärmeleitfähigkeit, der elektrischen Leitfähigkeit, der Permeabilität, der Porosität, der chemischen Beständigkeit, der Elastizität, der Härte, der Stauchhärte und der Festigkeit oder dergleichen ausgewählt werden.

Gemäß einer Weiterbildung kann die Innenstruktur zur passgenauen Aufnahme des Produkts geformt werden.

Gemäß einer Weiterbildung kann die Innenstruktur zur vollständigen Umschließung des Produktes geformt werden. Insbesondere kann der Aufnahmebehälter druckdicht und/oder flüssigkeitsdicht ausgebildet sein.

Gemäß einer Weiterbildung kann der Aufnahmebehälter mit einem mehrteiligen Gehäuse geformt werden. Die einzelnen Gehäusekomponenten können beispielsweise mit Randdichtungen versehen sein, sodass auch ein mehrteiliger Aufnahmebehälter dicht gegenüber Gasen, Feuchtigkeit und/oder Flüssigkeit gestaltet werden kann. 3D-Druckverfahren bieten hierbei den ganz erheblichen Vorteil, dass sowohl Dichtungen als auch andere funktionale Elemente direkt in einem einzigen Verfahren mit dem Aufnahmebehälter selber gedruckt werden können. Beispielsweise können Druckventile, durchsichtige Fenster und/oder Anzeigen integral mit dem Aufnahmebehälter gedruckt werden.

Gemäß einer Weiterbildung kann der Aufnahmebehälter wiederverschließbar geformt werden. Beispielsweise kann ein derartiger Aufnahmebehälter aus zwei Halbschalen bestehen, die über Gelenke, Schnapp- oder Steckverschlüsse oder andere Verschlusstechniken miteinander geschlossen werden können. Derartige Verschlüsse können direkt mit in den Aufnahmebehälter gedruckt werden. Aber auch Gewinde oder Befestigungselemente allgemeiner Art können in dem erfindungsgemäßen Verfahren ohne weiteren Aufwand mit in den Aufnahmebehälter eingedruckt werden. Beispielsweise können Führungsschienen oder Führungselemente außen an dem Gehäuse des Aufnahmebehälters vorgesehen sein, über welche mehrere Aufnahmebehälter übereinander gestapelt werden können.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Offenbarung umfassen auch nicht explizit genannte Kombinationen von zuvor oder im Folgenden bezüglich der Ausführungsbeispiele beschriebenen Merkmale der Offenbarung. Insbesondere wird dabei der Fachmann auch Einzelaspekte als Verbesserungen oder Ergänzungen zu der jeweiligen Grundform der vorliegenden Offenbarung hinzufügen. Die vorliegende Erfindung wird nachfolgend anhand der in den schematischen Figuren angegebenen Ausführungsbeispiele näher erläutert. Es zeigen dabei:
- Fig. 1: ein schematisches Ablaufdiagramm eines erfindungsgemäßen Verfahrens gemäß einer Ausführungsform der Erfindung;
- Fig. 2: eine schematische Ansicht einer 3D-Druckvorrichtung zur Durchführung des Verfahrens aus Fig. 1; und
- Fig. 3: eine schematische Schnittansicht eines Aufnahmebehälters gemäß einer Ausführungsform der Erfindung, der mit einem Verfahren gemäß Fig. 1 gefertigt ist.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

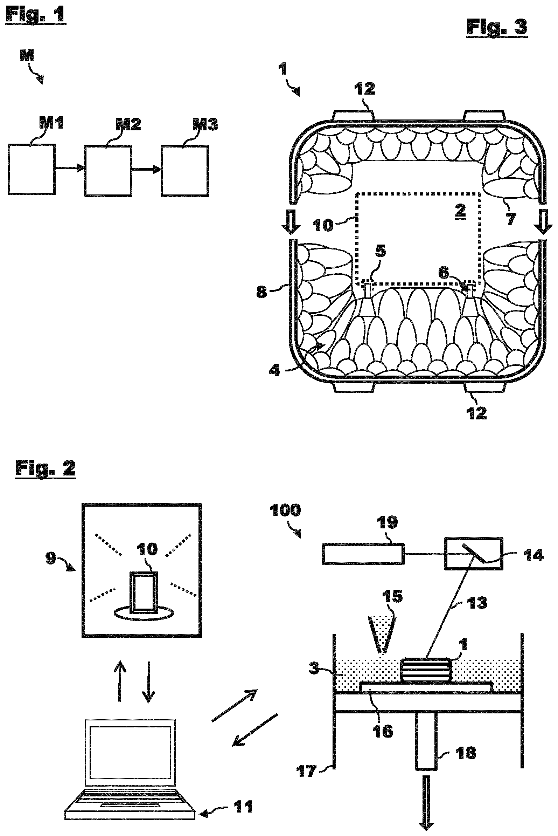

Figur 1 zeigt ein schematisches Ablaufdiagramm eines erfindungsgemäßen Verfahrens M gemäß einer Ausführungsform der Erfindung, mit Hilfe dessen ein Aufnahmebehälter 1, wie er in Fig. 3 schematisch dargestellt ist, additiv gefertigt wird. Fig. 2 zeigt hierzu eine schematische Ansicht einer 3D-Druckvorrichtung 100, mit welcher ein solches Verfahren M durchführbar ist.

Das Verfahren M sieht unter M1 das dreidimensionale Erfassen der äußeren Gestalt eines Produktes 10 vor, zu dessen Transport und/oder Lagerung der Aufnahmebehälter 1 dienen soll. Beispielsweise kann es sich hierbei um eine Komponente eines Luft- oder Raumfahrzeuges handeln. Zu diesem Zweck kann beispielsweise ein 3D-Scanner 9 verwendet werden, wie er in Fig. 2 schematisch gezeigt wird. In einem derartigen 3D-Scanner wird die Oberfläche des Produkts 10 von einem Laser systematisch rasterartig abgetastet, womit die äußere Gestalt sehr präzise vermessen werden kann und darauf aufbauend eine digitale Rekonstruktion der Oberflächengeometrie und Oberflächenstruktur des Produkts 10 durchführbar ist. Grundsätzlich wird dem Fachmann klar sein, dass auch entsprechende andere Verfahren angewendet werden können, mit Hilfe derer eine 3D-Rekonstruktion von Körpern vorgenommen werden kann, z.B. Streifenlichtscanning oder ähnliche Verfahren.

Das Verfahren M sieht unter M2 ferner das Erstellen eines computerlesbaren Datensatzes vor, welcher Informationen über die erfasste äußere Gestalt des Produkts 10 umfasst. Der Datensatz kann ferner um weitere Informationen ergänzt werden, z.B. das Gewicht, die Gewichtsverteilung und/oder die Dichteverteilung des Produkts 10. Ferner kann der Datensatz beispielsweise Informationen über charakteristische Schutzanforderungen des Produktes 10 umfassen, wie die Empfindlichkeit des Produkts 10 gegenüber Stößen oder anderen mechanischen Einflüssen, ein erlaubter Temperaturbereich oder das Vorgeben einer bestimmten Schutzatmosphäre mit vorgegebenen Druckgrenzwerten.

Aufbauend auf dem digitalisierten und gegebenenfalls weiter aufbereiteten Models des Produkts 10 sowie der gegebenen Schutzanforderungen kann mittels computergestützter Algorithmen auf einem Computer 11 ein optimierte Aufnahmebehälter 1 simuliert und berechnet werden. Hierzu können beispielsweise Finite-Elemente-Methoden angewendet werden. Mit solchen Methoden lassen sich die Kraftwirkungen, Lastpfade usw. innerhalb des Aufnahmebehälters 1 bestimmen, und darauf aufbauend kann eine optimale geometrische und strukturelle Ausgestaltung des Aufnahmebehälters 1 für ein bestimmtes vorgegebenes Produkt 10 berechnet werden.

Ferner sieht das Verfahren unter M3 das additive Fertigen des Aufnahmebehälters 1 vor. Dies umfasst, dass ein Modelliermaterial 3, z.B. ein Kunststoff wie ABS, ein Metall, eine Metalllegierung, ein metallisches Material und/oder eine Kombination dieser Materialien basierend auf dem erstellten Datensatz computergesteuert schichtweise abgelegt, verflüssigt und ausgehärtet wird. Je nach der verwendeten additiven Verfahrenstechnik kann das Modelliermaterial 3 zuerst verflüssigt und anschließend abgelegt oder zuerst abgelegt und dann verflüssigt werden. Das Modelliermaterial 3 wird derart in aufeinanderfolgenden Schichten konsekutiv übereinander geschichtet, dass der Aufnahmebehälter 1 mit einer Innenstruktur 4 geformt wird, welche einen an die äußere Gestalt des Produkts 10 angepassten Aufnahmeraum 2 umgibt. Der Aufnahmeraum 2 dient zur Aufnahme des Produkts 10 (in Fig. 3 ist das Produkt 10 der Übersichtlichkeit halber lediglich gestrichelt angedeutet).

Für das additive Fertigen des Aufnahmebehälters 1 wird das Modelliermaterial 3 an eine 3D-Druckvorrichtung 100 zugeführt, wie sie in Fig. 2 abgebildet ist. Hierzu kann das Modelliermaterial 3 beispielsweise in Pulverform vorliegen. Grundsätzlich sieht die vorliegende Erfindung vielfältige Möglichkeiten vor, das Modelliermaterial 3 zu verflüssigen, bei welchen Wärme gezielt lokal in abgelegtes Modelliermaterial 3 eingeleitet werden kann. Besonders die Verwendung von Lasern und/oder Teilchenstrahlen, z.B. Elektronenstrahlen, ist vorteilhaft, da hierbei Hitze sehr gezielt und kontrolliert erzeugbar ist. Das additive Fertigen kann somit beispielsweise aus der Gruppe selektiven Lasersinterns, selektiven Laserschmelzens, selektiven Elektronenstrahlsinterns und selektiven Elektronenstrahlschmelzens oder dergleichen ausgewählt werden. Grundsätzlich kann jedoch ein beliebiges additives Verfahren zur Anwendung kommen. Im Folgenden wird das Verfahren M beispielhaft im Zusammenhang mit selektiven Laserschmelzen (SLM) erläutert werden, bei welchem das Modelliermaterial 3 in Pulverform auf eine Werkplattform 16 aufgebracht wird und gezielt durch lokale Laserbestrahlung mit einem Laserstrahl 13 verflüssigt wird, wodurch sich nach Abkühlung ein zusammenhängender Aufnahmebehälter 1 ergibt.

Eine Energiequelle in Form eines Lasers 19, beispielsweise ein Nd:YAG-Laser, sendet einen Laserstrahl 13 ortsselektiv auf einen bestimmten Teil einer Pulveroberfläche des pulverförmigen Modelliermaterials 3, welches in einer Arbeitskammer 17 auf einer Werkplattform 16 aufliegt. Dazu kann eine optische Ablenkvorrichtung bzw. ein Scanner-Modul wie etwa ein beweglicher bzw. kippbarer Spiegel 14 vorgesehen sein, welcher den Laserstrahl 13 je nach seiner Kippstellung auf einen bestimmten Teil der Pulveroberfläche des Modelliermaterials 3 ablenkt. An der Auftreffstelle des Laserstrahls 13 wird das Modelliermaterial 3 erhitzt, so dass die Pulverpartikel lokal aufgeschmolzen werden und bei einem Abkühlen ein Agglomerat bilden. In Abhängigkeit von dem durch den 3D-Scanner bereitgestellten digitalen Modell es Aufnahmebehälters 1, welches gegebenenfalls noch weiter aufbereitet wird, rastert der Laserstrahl 13 die Pulveroberfläche ab. Nach dem selektiven Schmelzen und lokalen Agglomerieren der Pulverpartikel in der Oberflächenschicht des Modelliermaterials 3 kann überschüssiges, nicht agglomeriertes Modelliermaterial 3 ausgesondert werden. Danach wird die Werkplattform 16 mittels eines Absenkkolbens 18 abgesenkt (siehe Pfeil in Fig. 2) und mit Hilfe einer Pulverzufuhr 15 oder einer anderen geeigneten Einrichtung neues Modelliermaterial 3 aus einem Reservoir in die Arbeitskammer 17 überführt. Das Modelliermaterial 3 kann zur Beschleunigung des Schmelzprozesses durch Infrarotlicht auf eine knapp unter der Schmelztemperatur des Modelliermaterials 3 liegende Arbeitstemperatur vorgewärmt werden. Auf diese Weise entsteht in einem iterativen generativen Aufbauprozess ein dreidimensionale gesinterter bzw. "gedruckter" Aufnahmebehälter 1 aus agglomeriertem Modelliermaterial 3. Das umliegende pulverförmige Modelliermaterial 3 kann dabei der Abstützung des bis dahin aufgebauten Teils des Aufnahmebehälters 1 dienen. Durch die kontinuierliche Abwärtsbewegung der Werkplattform 16 entsteht er Aufnahmebehälter 1 in schichtweiser Modellerzeugung.

Bezugnehmend auf Fig. 3 wird im Folgenden eine beispielhafte Ausführung eines Aufnahmebehälters 1 diskutiert, welche mit dem oben dargestellten Verfahren M herstellbar ist. Der Aufnahmebehälter 1 wird mit einem äußeren Gehäuse 8 geformt, welches aus zwei Schalenhälften besteht, die miteinander verschließbar sind (vgl. Pfeile in Fig. 3) und in dem geschlossenen Zustand ein eingelegtes Produkt 10 vollständig umschließen. Das Gehäuse 8 kann beispielsweise mit den üblichen dem Fachmann bekannten Hilfsmitteln wie Druck-, Steck- oder Schnappverschlüssen oder dergleichen wiederverschließbar gestaltet sein (nicht eingezeichnet). Die Verschlüsse, eventuell gewünschte Dichtungen und weitere funktionale Elemente können direkt innerhalb des additiven Fertigungsprozesses in den Aufnahmebehälter 1 mit eingedruckt werden. Beispielsweise kann der Aufnahmebehälter 1 als druckdichter Behälter ausgebildet sein. Entsprechend können entsprechende Mittel zur Veränderung und Kontrolle des Druckes mit in den Aufnahmebehälter 1 eingebracht werden. Gegebenenfalls ist auch dies im Zuge des 3D-Druckverfahrens möglich, ohne dass zusätzliche Schritte notwendig sind. In Fig. 3 sind beispielhaft vier Stapelführungen 12 an dem Aufnahmebehälter 1 angeformt, mit Hilfe derer mehrere solcher Aufnahmebehälter 1 übereinander gestapelt werden können.

Der Aufnahmebehälter 1 in Fig. 3 weist innerhalb des Gehäuses 8 eine hohle Innenstruktur 4 auf, welche eine Vielzahl von untereinander verbundenen Stützstreben 7 aufweist, die integral mit dem Gehäuse 8 geformt sind. Die Dichte der Stützstreben 7 nimmt von außen nach innen ab. Der von der Innenkontur der Innenstruktur 4 definierte Aufnahmeraum 2 ist derart dimensioniert, dass das Produkt 10 passgenau in den Aufnahmeraum 2 und damit den Aufnahmebehälter 1 einsetzbar ist. Zur Lagerung des Produkts 10 sind in den Aufnahmebehälter 1 in Fig. 3 mehrere stiftförmige Lagerelemente 6 geformt, welche jeweils zur Aufnahme des Produkts 10 an dafür vorgesehen Lagerpunkten 5 an dem Produkt 10 ausgebildet sind, sodass dieses zusätzlich in dem Aufnahmeraum 2 fixiert wird. Sowohl die Lagerelemente 1 als auch die Innenstruktur 4 selbst können elastisch ausgebildet sein, sodass das Produkt 10 möglichst optimal gegenüber äußeren mechanischen Einflüssen wie Stößen oder Vibrationen isolierbar ist. Sowohl die Anordnung und Konfiguration der Innenstruktur 4, d.h. insbesondere der Stützstreben 7, als auch die Positionierung der Lagerelemente 6 kann hierbei mittels entsprechender computergestützter Optimierungsalgorithmen konfiguriert werden. Beispielsweise kann das Gewicht und/oder die Gewichtsverteilung des Produkts 10 in diese Algorithmen einfließen, um möglichst vorteilhafte Lagerpunkte und Dämpfungseigenschaften der Innenstruktur 4 und der Stützstrukturen 7 zu erreichen. Dem Fachmann wird sich hieraus unmittelbar erschließen, dass die gezeigte geometrische Ausgestaltung der Innenstruktur 4 lediglich beispielhafter Natur ist und ggf. für den jeweiligen Anwendungsfall unterschiedliche Innenstrukturen 4 vorteilhaft sein können. Beispielsweise kann es vorteilhaft sein, die Innenstruktur 4 massiv und ohne Hohlstrukturen zu formen. In anderen Anwendungsfällen kann eine schaumstoffartige bzw. schaumartige Gestaltung der Innenstruktur 4 vorteilhaft sein, ohne dass diskrete Stützstreben 7 zur Anwendung kommen.

Darüber hinaus können zudem charakteristische Schutzanforderungen des Produktes 10 bei der Formung des Aufnahmebehälters 1 und dessen Innenstruktur 4 berücksichtigt werden. Beispielsweise können spezifische Kenngrößen der Innenstruktur 4 auf die Schutzanforderungen optimiert werden. So kann beispielsweise die Wärmeleitfähigkeit, die elektrische Leitfähigkeit, die Permeabilität, die Porosität, die chemischen Beständigkeit, die Elastizität, die Härte, die Stauchhärte und/oder die Festigkeit oder dergleichen der Innenstruktur 4 an die spezifischen Anforderungen der jeweiligen Anwendung, d.h. des jeweiligen Produkts bzw. technischen Geräts, angepasst werden. Hierbei bietet das computergestützte Verfahren M der vorliegenden Erfindung erhebliche Vorteile gegenüber herkömmlichen Verfahren. Mit dem erfindungsgemäßen Verfahren kann ein passender Aufnahmebehälter 1 für hochanspruchsvolle und kostenintensive technische Geräte vollständig in integraler Weise in einem einzigen Druckprozess gefertigt werden, ohne dass besonderer Aufwand oder gar händische Arbeit notwendig wären. Hierzu muss lediglich einmal das aufzunehmende Produkt 10 eingescannt werden und darauf aufbauend eine geometrische Konfiguration für den Aufnahmebehälter 1 für die gegebenen Randbedingungen berechnet werden. Sobald ein entsprechendes 3D-Modell erstellt worden ist bzw. verfügbar ist, kann jederzeit und an jedem Ort mit einer entsprechend ausgerüsteten 3D-Druckvorrichtung ein entsprechender Aufnahmebehälter 1 gedruckt werden, der eine ideale Druckform und Druckdichte aufweist.

Die beschriebenen Verfahren und Aufnahmebehälter können in allen Bereichen der Transportindustrie, beispielsweise für Straßenkraftfahrzeuge, für Schienenfahrzeuge oder für Wasserfahrzeuge, aber auch im Ingenieurs- und Maschinenbauwesen generell eingesetzt werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Aufnahmebehälter
- 2: Aufnahmeraum
- 3: Modelliermaterial
- 4: Innenstruktur
- 5: Lagerpunkt
- 6: Lagerelement
- 7: Stützstrebe
- 8: Gehäuse
- 9: 3D-Scanner
- 10: Produkt
- 11: Computer
- 12: Stapelführung
- 13: Laserstrahl
- 14: Spiegel
- 15: Pulverzufuhr
- 16: Werkplattform
- 17: Arbeitskammer
- 18: Absenkkolben
- 19: Laser
- 100: 3D-Druckvorrichtung
- M: Verfahren
- M1: Verfahrensschritt
- M2: Verfahrensschritt
- M3: Verfahrensschritt

## Patentansprüche

1. Verfahren (M) zur additiven Fertigung eines Aufnahmebehälters (1) für die Lagerung und/oder den Transport eines Produktes (10), mit:
dreidimensionalem Erfassen (M1) der äußeren Gestalt des Produktes (10);
Erstellen (M2) eines computerlesbaren Datensatzes, welcher Informationen über die erfasste äußere Gestalt des Produkts (10) umfasst; und
additives Fertigen (M3) des Aufnahmebehälters (1), wobei ein Modelliermaterial (3) basierend auf dem erstellten Datensatz computergesteuert schichtweise abgelegt, verflüssigt und ausgehärtet wird, wobei der Aufnahmebehälter (1) mit einer Innenstruktur (4) geformt wird, welche einen an die äußere Gestalt des Produkts (10) angepassten Aufnahmeraum (2) umgibt;
wobei der Datensatz Informationen über charakteristische Schutzanforderungen des Produktes (10) umfasst und die Innenstruktur (4) derart geformt wird, dass spezifische Kenngrößen der Innenstruktur (4) auf die Schutzanforderungen optimiert werden.

2. Verfahren (M) nach Anspruch 1, wobei der Datensatz Informationen über nutzbare Lagerpunkte (5) des Produktes (10) umfasst und die Innenstruktur (4) mit Lagerelementen (6) geformt wird, welche jeweils zur Aufnahme des Produktes (10) an einem der Lagerpunkte (5) ausgebildet sind.

3. Verfahren (M) nach Anspruch 2, wobei die Lagerelemente (6) federelastisch in die Innenstruktur (4) geformt werden.

4. Verfahren (M) nach einem der vorstehenden Ansprüche, wobei die Innenstruktur (4) auf das Gewicht und/oder die Gewichtsverteilung des Produktes (10) optimiert wird.

5. Verfahren (M) nach Anspruch 4, wobei die Innenstruktur (4) mit einer Vielzahl von untereinander verbundenen Stützstreben (7) geformt wird.

6. Verfahren (M) nach einem der vorstehenden Ansprüche, wobei die spezifischen Kenngrößen aus der Gruppe der Wärmeleitfähigkeit, der elektrischen Leitfähigkeit, der Permeabilität, der Porosität, der chemischen Beständigkeit, der Elastizität, der Härte, der Stauchhärte und der Festigkeit ausgewählt werden.

7. Verfahren (M) nach einem der vorstehenden Ansprüche, wobei die Innenstruktur (4) zur passgenauen Aufnahme des Produkts (10) geformt wird.

8. Verfahren (M) nach einem der vorstehenden Ansprüche, wobei die Innenstruktur (4) zur vollständigen Umschließung des Produktes (10) geformt wird.

9. Verfahren (M) nach einem der vorstehenden Ansprüche, wobei der Aufnahmebehälter (1) mit einem mehrteiligen Gehäuse (8) geformt wird.

10. Verfahren (M) nach einem der vorstehenden Ansprüche, wobei der Aufnahmebehälter (1) wiederverschließbar geformt wird.

11. Computerlesbares Medium, auf welchem computerausführbare Anweisungen gespeichert sind, die bei Ausführung mittels einer 3D-Druckvorrichtung (100) die 3D-Druckvorrichtung (100) dazu veranlassen, ein Verfahren (M) nach einem der Ansprüche 1 bis 10 auszuführen.

## Claims

1. Method (M) for the additive manufacturing of a receptacle (1) for the storage and/or transport of a product (10), comprising:
three-dimensionally capturing (M1) the external form of the product (10);
compiling (M2) a computer-readable data set, which comprises information about the captured external form of the product (10); and
additively manufacturing (M3) the receptacle (1), wherein a modelling material (3) is deposited in layers in a computer-controlled manner on the basis of the compiled data set, liquefied and cured, wherein the receptacle (1) is formed with an internal structure (4) which surrounds a receiving space (2) adapted to the external form of the product (10);
wherein the data set comprises information about characteristic protection requirements for the product (10) and the internal structure (4) is formed in such a way that specific characteristic variables of the internal structure (4) are optimized to the protection requirements.

2. Method (M) according to Claim 1, wherein the data set comprises information about usable mounting points (5) of the product (10) and the internal structure (4) is formed with mounting elements (6) which are respectively designed for receiving the product (10) at one of the mounting points (5).

3. Method (M) according to Claim 2, wherein the mounting elements (6) are resiliently formed into the internal structure (4).

4. Method (M) according to one of the preceding claims, wherein the internal structure (4) is optimized for the weight and/or the weight distribution of the product (10) .

5. Method (M) according to one of the preceding claims, wherein the internal structure (4) is formed with a multiplicity of interconnected supporting struts (7).

6. Method (M) according to one of the preceding claims, wherein the specific characteristic variables are selected from the group comprising thermal conductivity, electrical conductivity, permeability, porosity, chemical resistance, elasticity, hardness, compression hardness and strength.

7. Method (M) according to one of the preceding claims, wherein the internal structure (4) is formed so as to receive the product (10) with an exact fit.

8. Method (M) according to one of the preceding claims, wherein the internal structure (4) is formed so as to completely enclose the product (10).

9. Method (M) according to one of the preceding claims, wherein the receptacle (1) is formed with a multipart housing (8).

10. Method (M) according to one of the preceding claims, wherein the receptacle (1) is formed so as to be reclosable.

11. Computer-readable medium on which computer-executable instructions are stored which, when executed by means of a 3D printing device (100), cause the 3D printing device (100) to perform a method (M) according to one of Claims 1 to 10.

## Revendications

1. Procédé (M) de fabrication additive d'un récipient (1) destiné au stockage et/ou au transport d'un produit (10), le procédé comprenant les étapes suivantes :
effectuer une détection tridimensionnelle (M1) de la forme extérieure du produit (10) ;
générer (M2) un ensemble de données, lisible par ordinateur, qui comprend des informations sur la forme extérieure détectée du produit (10) ; et
fabriquer de manière additive (M3) le récipient (1), un matériau de modélisation (3) étant déposé par couches, liquéfié et durci sous commande informatisée sur la base de l'ensemble de données généré, le récipient de réception (1) étant formé avec une structure intérieure (4) qui entoure un espace de réception (2) adapté à la forme extérieure du produit (10) ;
l'ensemble de données comprenant des informations sur les exigences de protection caractéristiques du produit (10) et la structure intérieure (4) étant formée de manière à optimiser des paramètres spécifiques de la structure intérieure (4) pour les exigences de protection.

2. Procédé (M) selon la revendication 1, l'ensemble de données comprenant des informations sur les points de stockage utilisables (5) du produit (10) et la structure intérieure (4) étant formée avec des éléments de stockage (6) qui sont chacun conçus pour recevoir le produit (10) au niveau de l'un des points de stockage (5) .

3. Procédé (M) selon la revendication 2, les éléments de stockage (6) étant formés élastiquement dans la structure intérieure (4).

4. Procédé (M) selon l'une des revendications précédentes, la structure intérieure (4) étant optimisée pour le poids et/ou la répartition du poids du produit (10).

5. Procédé (M) selon la revendication 4, la structure intérieure (4) étant formée avec une pluralité d'entretoises de support (7) reliées entre elles.

6. Procédé (M) selon l'une des revendications précédentes, les paramètres spécifiques étant choisis dans le groupe comprenant la conductivité thermique, la conductivité électrique, la perméabilité, la porosité, la résistance chimique, l'élasticité, la dureté, la dureté à la compression et la résistance mécanique.

7. Procédé (M) selon l'une des revendications précédentes, la structure intérieure (4) étant formée pour recevoir le produit (10) de manière ajustée avec précision.

8. Procédé (M) selon l'une des revendications précédentes, la structure intérieure (4) étant formée pour enfermer complètement le produit (10).

9. Procédé (M) selon l'une des revendications précédentes, le récipient (1) étant formé avec un boîtier (8) en plusieurs parties.

10. Procédé (M) selon l'une des revendications précédentes, le récipient (1) étant formé de façon à pouvoir être refermé.

11. Support lisible par ordinateur sur lequel sont mémorisées des instructions exécutables par ordinateur qui, lorsqu'elles sont exécutées au moyen d'un dispositif d'impression 3D (100), amènent le dispositif d'impression 3D (100) à mettre en œuvre un procédé (M) selon l'une des revendications. 1 à 10.
